# FASCICULE DE BREVET EUROPEEN

(11) **EP 2 908 933 B1**
(45) Date de publication et mention de la délivrance du brevet: **07.03.2018**
(21) Numéro de dépôt: 13782755.6
(22) Date de dépôt: 24.09.2013
(51) Int. Cl.: B01J 8/00, B01J 8/06

(54) **SYSTEME DE CHARGEMENT DENSE DU CATALYSEUR DANS DES TUBES A BAIONNETTE POUR REACTEUR ECHANGEUR DE VAPOREFORMAGE**
SYSTEM FÜR DICHTE KATALYSATORBELADUNG IN BAJONETTRÖHREN FÜR EINEN DAMPFREFORMIERUNGSREAKTOR-TAUSCHER
SYSTEM FOR DENSE CATALYST LOADING IN BAYONET TUBES FOR A STEAM REFORMING REACTOR-EXCHANGER

(30) Priorité: 17.10.2012 FR 1202771
(43) Date de publication de la demande: 26.08.2015
(73) Titulaire: IFP Energies nouvelles, 92500 Rueil-Malmaison (FR)
(72) Inventeur: SANZ, Elena, F-69005 Lyon (FR); BEAUMONT, Robert, F-69140 Rillieux La Pape (FR); SVEZIA, Daniel, F-69320 Feyzin (FR); BOYER, Christophe, F-69390 Charly (FR)
(86) Numéro de dépôt international: PCT/FR2013/052242
(87) Numéro de publication internationale: WO 2014/060670

(56) Documents cités:
- EP-A1- 1 749 568
- WO-A1-2007/039764
- WO-A1-2008/151139
- WO-A1-2011/012875
- FR-A1- 2 789 050
- FR-A1- 2 950 822
- US-A1- 2009 257 849

## Description

### DOMAINE DE L'INVENTION

La présente invention se situe dans le domaine du chargement des tubes catalytiques utilisés dans des réacteurs tubulaires mettant en oeuvre des réactions fortement endothermiques ou fortement exothermiques. La présente invention est donc particulièrement adaptée au réacteur de vaporeformage de gaz naturel ou de diverses coupes hydrocarbonées en vue de la production du mélange CO+H₂ appelé gaz de synthèse.

On peut distinguer deux grandes familles de réacteurs de vaporeformage.

Les réacteurs dans lesquels la chaleur est apportée par un ensemble de brûleurs situés à l'intérieur du réacteur, et ceux dans lesquels la chaleur est apportée par un fluide caloporteur, généralement des fumées de combustion, ladite combustion ayant lieu à l'extérieur du réacteur de vaporeformage lui même.

Certains réacteurs de ce dernier type qu'on appelle dans la suite réacteur échangeur, font appel à des tubes simples. D'autres font appel à des tubes concentriques doubles également appelés tubes à baïonnette. Un tube à baïonnette peut se définir comme un tube intérieur entouré d'un tube extérieur coaxial au tube interne, l'espace annulaire compris entre le tube intérieur et le tube extérieur étant généralement rempli de catalyseur. Dans la suite du texte on parlera d'espace annulaire ou de zone catalytique pour désigner ledit espace annulaire défini par les tubes à baïonnette.

Dans le cadre de la présente invention, le gaz naturel, ou plus généralement la charge hydrocarbonée, est introduit(e) par la zone annulaire selon un écoulement de haut en bas, et les effluents réactionnels sont collectés dans la partie centrale du tube interne selon un écoulement de bas en haut.

La réaction de vaporeformage du gaz naturel pour la production d'hydrogène, est très endothermique et a donc généralement lieu dans des fours ou des réacteurs-échangeurs au sens précédemment défini.

La réaction a lieu a des températures très élevées, typiquement 900°C et sous pression, typiquement de 20 à 30 bars. Dans ces conditions, seule une mise en oeuvre de la réaction à l'intérieur de tubes peut être envisagée dans des conditions économiquement viables en raison de la tenue mécanique des matériaux.

Les réacteurs échangeurs catalytiques sont donc constitués d'une multitude de tubes, typiquement de l'ordre de 200 à 350 tubes pour des unités produisant 100 000 Nm³/h d'hydrogène, cet ensemble de tubes étant enfermé dans une calandre qui reçoit le fluide chaud permettant d'apporter les calories nécessaires à la réaction de vaporeformage.

Ce fluide chaud ou fluide caloporteur est généralement constitué par les fumées d'une combustion ayant lieu à l'extérieur du réacteur échangeur.

Le catalyseur doit donc être installé dans tous les tubes de vaporeformage de façon régulière d'un tube à l'autre, afin d'avoir une perte de charge identique d'un tube à l'autre.

Cette condition est très importante pour garantir une bonne répartition des réactifs sur l'ensemble des tubes catalytiques et éviter qu'un tube soit par exemple moins alimenté, ce qui pourrait conduire à une surchauffe importante du matériau constituant le tube, cette surchauffe réduisant d'autant la durée de vie du tube.

De même, il est important qu'aucun espace vide, c'est à dire sans catalyseur ou appauvri en catalyseur, ne subsiste dans un tube, car à nouveau le tube pourrait surchauffer localement, faute de réaction catalytique à l'intérieur. De plus, toute hétérogénéité dans la répartition du catalyseur dans la zone réactionnelle peut se traduire par un écoulement déséquilibré du ou des fluides réactionnels.

Le dispositif selon la présente invention vise donc un chargement à la fois dense et homogène entre chacun des tubes baïonnette faisant partie du réacteur échangeur.

### EXAMEN DE L'ART ANTERIEUR

Dans un four de reformage classique, le chargement traditionnel des tubes, qui ont un diamètre intérieur typique de 10 cm, se fait à l'aide de sachets remplis de catalyseur qui sont ouverts sur la surface du lit. Ce mode de chargement est connu de l'homme du métier sous l'appellation de chargement "à la chaussette", et est connu pour ne pas générer une importante densité de chargement.

Les tubes sont ensuite vibrés manuellement à coup de marteau ou par un système de vibration mécanique, pour favoriser la mise en place des grains de catalyseur, minimiser les espaces vides et ainsi augmenter la densité de chargement. Cependant, une vibration excessive peut conduire à la rupture des grains de catalyseur, et à une augmentation importante de la perte de charge.

Il est néanmoins difficile avec cette méthode de faire un chargement de bonne qualité, et il est généralement nécessaire de reproduire plusieurs fois l'opération de vibration pour parvenir à des pertes de charge voisines d'un tube à l'autre.

D'autres procédures et équipements améliorés ont été proposés sous le terme de technologie Unidense™ initialement développée par Norsk Hydro ou encore sous le terme de technologie Spiraload™ développée par Haldor Topsøe. Ces technologies s'appliquent à des tubes simples et non à des tubes à baïonnette.

Le brevet FR 2950822 de la demanderesse décrit une solution pour le chargement des tubes à baïonnette avec 3 tubes de chargement, avec freins mécaniques ou freinage pneumatique.

Cette méthode de chargement permet un chargement dense et uniforme des tubes baïonnette.

S'agissant d'une méthode "grain par grain", elle s'avère trop lente et peu adaptée pour une mise en oeuvre à l'échelle d'un réacteur industriel comportant plusieurs centaines de tubes.

De manière générale, on peut dire que de nombreux documents existent dans le domaine du chargement de catalyseur dans les tubes de vaporeformage. La plupart d'entre eux font appel à des moyens de ralentissement ou à des obstacles plus ou moins rigides en forme de plan incliné.

Mais aucun des documents retrouvés ne concerne une application aux tubes à baïonnette avec chargement d'une zone annulaire et évitement du tube central.

Le dispositif objet de la présente invention peut donc se définir comme un dispositif de chargement dense de catalyseur dans la zone annulaire des tubes baïonnette équipant un réacteur échangeur de vaporeformage, le dispositif permettant un chargement homogène en densité dans chacun des tubes du réacteur échangeur en respectant une contrainte de temps compatible avec les impératifs d'un démarrage industriel.

De plus, dans un certain nombre de cas, le dispositif selon l'invention doit pouvoir s'adapter à des variations de diamètre intérieur du tube externe, imposées par les contraintes mécaniques et thermiques qui évoluent le long du tube, donc à un changement de dimensions de la zone annulaire. Aucun dispositif de l'art antérieur ne prend en compte cette contrainte supplémentaire.

### DESCRIPTION SOMMAIRE DES FIGURES

La figure la représente le dispositif selon l'invention dans le cas où la zone annulaire (4) présente des variations de dimensions liées au changement de diamètre du tube externe (6).
La figure 1b représente un élément ralentisseur selon l'invention en perspective.
La figure 1c représente le dispositif selon l'invention et la pièce de centrage (12) en vue de dessus.

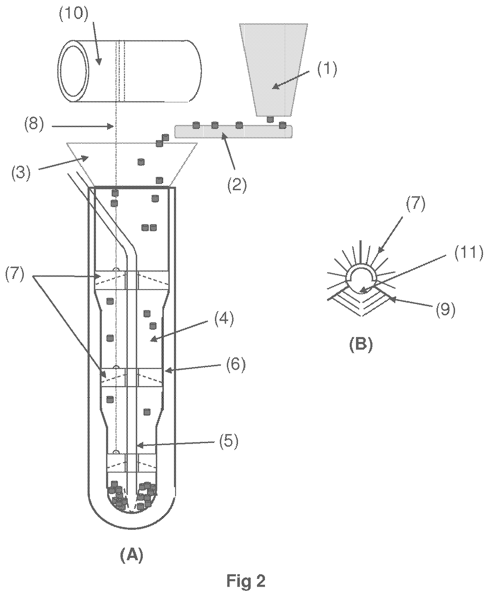

La figure 2a représente le dispositif selon l'invention dans le cas où la zone annulaire (4) présente des variations de dimensions et est traversée dans sa partie supérieure par le tube interne (5).
La figure 2b représente un élément ralentisseur selon l'invention en vue de dessus.
La figure 3 représente une variante dans laquelle les éléments ralentisseurs ont une structure rigide périphérique, c'est à dire attenante au tube externe (6).
La figure 4 représente des éléments ralentisseurs qui ont la forme de morceaux d'hélice.

### DESCRIPTION SOMMAIRE DE L'INVENTION

La présente invention peut se définir comme un réacteur à tube baïonnette et un dispositif de remplissage dense du catalyseur selon la revendication 1. Dans la version de base, l'espace annulaire (4) de chaque tube baïonnette forme un espace continu et présente seulement dans sa partie supérieure un obstacle constitué par le tube interne (5) traversant le tube externe (6). Cet obstacle pose un problème pour le déploiement du dispositif selon l'invention, et peut être contourné en ouvrant la structure circulaire rigide, par exemple sur une demi circonférence de manière à pouvoir l'engager autour du tube interne (5), puis en refermant ladite structure rigide au moyen d'un système de collier (11), le collier étant lui même équipé de tiges souples sensiblement radiales.

Dans la version où le tube interne (5) est maintenu centré par un centreur (12), la structure rigide des éléments ralentisseurs peut être ouverte en étant divisée en deux ou 3 morceaux, puis refermée par tout moyen de fixation lorsque l'obstacle est franchi.

Dans le cas où le diamètre interne du tube externe (6) présente des variations définissant des portions de tube externe (6) de diamètre décroissant de haut en bas du tube baïonnette, la solution apportée dépend du type de structure rigide.
- Si la structure des éléments ralentisseurs (7) est rigide autour du tube interne (5), structure rigide dite "centrale", l'ajustement aux différents diamètres du tube externe (6) se fait par la souplesse des tiges souples dont la longueur est calculée pour pouvoir atteindre la paroi du tube externe (6) de plus grand diamètre.

Lors de la mise en place du dispositif, une masse de lest peut être ajoutée au premier élément ralentisseur pour faciliter son déploiement dans la portion de zone annulaire (4) de plus petit diamètre.

Dan une variante du dispositif de remplissage selon l'invention, pour faciliter la descente du dispositif à l'intérieur de la zone annulaire (4), le premier élément ralentisseur (7) est équipé de poids qui permettent de vaincre le frottement des tiges souples à la paroi du tube externe (6) en cas de structure rigide centrale. La présente invention concerne également une méthode de chargement du catalyseur faisant appel au réacteur et au dispositif précédemment décrit, méthode qui peut se décomposer dans la série d'étapes suivantes :
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier élément ralentisseur (7) atteigne une distance par rapport au fond du tube comprise entre 50 cm et 100 cm,
- le tapis roulant ou le couloir vibrant (2) est mis en route de manière à fournir un débit de solide compris entre 250 kg/h et 500 kg/h, les particules solides étant introduites dans la zone annulaire (4) par l'intermédiaire de l'entonnoir (3),
- au fur et à mesure que le tube se remplit, le système de chargement est remonté dans la zone annulaire (4) à l'aide de l'enrouleur externe (10), de manière à respecter une distance constante entre le premier élément ralentisseur (7) et la surface du lit qui se constitue progressivement, ladite distance étant comprise entre 50 cm et 100 cm,
- le système est enroulé avec une vitesse équivalente à la vitesse de chargement du tube comprise entre 0,2 mètre/min et 0,4 mètre/min,
- une fois le tube chargé et le système de chargement enroulé, le système est déplacé pour le chargement du tube suivant.

### DESCRIPTION DETAILLÉE DE L'INVENTION

La présente invention peut se définir comme un dispositif permettant le chargement dense de catalyseur dans l'espace annulaire (4) de tubes à baïonnette, chaque tube baïonnette ayant une hauteur comprise entre 10 m et 20 m, un diamètre du tube externe (6) compris entre 250 mm et 150 mm, et un diamètre externe du tube interne (5) compris entre 10 et 40 mm.

L'espace annulaire (4) contenant le catalyseur a donc une largeur caractéristique d'environ 50 mm. Dans la pratique, selon les cas, la largeur caractéristique de l'espace annulaire (4) pourra varier entre 30 mm et 80 mm.

De plus, dans certains cas le tube externe (6) a un diamètre décroissant de haut en bas par tronçons, ce qui signifie que la largeur caractéristique de l'espace annulaire (4) diminue également en allant de haut en bas. Le dispositif selon l'invention est conçu pour s'adapter à ces variations de largeur caractéristique et conserver ses performances sur l'ensemble des tronçons.

Un des problèmes majeurs posés par leur chargement dans des tubes de plus de 15 mètres de longueur est le risque de casse des particules catalytiques à charger, si on les faisait simplement tomber en chute libre sans aucune précaution, ce qui est une des solutions de l'art antérieur pour réaliser un chargement dense, sachant que le risque de casse apparait généralement des une hauteur de chute de 1mètre.

D'autres problèmes sont liés à la géométrie même de l'espace catalytique annulaire, ce qui interdit le passage des systèmes de chargement classiques.

Dans un cas fréquent dans le contexte de la présente invention, il faut tenir compte du tube interne (5) qui traverse le tube externe (6) dans la partie supérieure de la zone annulaire (4) pour permettre une sortie totalement dégagée des effluents réactionnels.

Les éléments ralentisseurs (7) permettent de contourner cet obstacle lors de la mise en place du dispositif en ayant une structure rigide qui peut s'ouvrir en plusieurs morceaux, généralement deux, puis se refermer après passage de l'obstacle par tout moyen de fixation connu de l'homme du métier.

Cette possibilité d'ouverture de la structure rigide des éléments ralentisseurs est également utile pour franchir l'obstacle constitué par la pièce de centrage (12), lorsque celle ci existe.

Comme indiqué dans l'art antérieur, le risque de formation de voûte est accentué lorsque le ratio entre le diamètre du tube et la dimension principale des particules est inférieur à 8, ce qui est souvent le cas dans le contexte de la présente invention, puisque la largeur typique de l'espace annulaire (50 mm) équivaut à environ 4 fois le diamètre caractéristique des particules de catalyseur.

Le dispositif selon la présente invention réduit considérablement le risque de formation de voûtes puisque les particules solides vont être ralenties au passage à travers les tiges souples des éléments ralentisseurs, et vont se déposer de façon progressive sur la surface du lit.

La hauteur de chute des particules depuis le premier élément ralentisseur (compté de bas en haut) jusqu'à la surface du lit catalytique en formation est au plus de 1 mètre.

Enfin, le chargement se faisant tube par tube (ou par groupe de deux ou trois tubes alimentés en parallèle), il doit être suffisamment rapide pour une utilisation industrielle, car un réacteur de vaporeformage visant une production d'environ 100 000 Nm³/h d'H₂ compte généralement de 200 à 350 tubes baïonnettes.

Le dispositif de remplissage selon l'invention consiste en :
- un ensemble d'éléments ralentisseurs (7) régulièrement répartis verticalement le long de l'espace annulaire (4), occupant toute la section de ladite zone annulaire, et reliés entre eux par des liaisons verticales souples et séparés d'une distance verticale comprise entre 50 cm et 150 cm,
- lesdits éléments ralentisseurs (7) étant reliés entre eux par une ou plusieurs chaînes (8) qui s'enroulent autour d'un enrouleur (10) situé à l'extérieur du tube à remplir, et les particules de catalyseur étant contenues dans
- une trémie centrale (1) permettant de délivrer les particules sur un tapis roulant (2) alimentant l'espace annulaire (4), par l'intermédiaire
- d'un entonnoir (3), par lequel s'écoulent les particules à l'intérieur de l'espace annulaire (4).

L'espace annulaire (4) ainsi défini peut être unique ou divisé en plusieurs secteurs sensiblement identiques par un système dit "centreur" (12). Un secteur se définit donc comme une portion d'espace annulaire qui correspond à une fraction bien définie de la section annulaire et s'étend sur toute la hauteur dudit espace annulaire.

Chaque élément ralentisseur (7) a la forme d'un anneau circulaire rigide attenant au tube interne (5), cet anneau étant muni d'une pluralité de tiges souples radiales qui occupent la totalité de la section de la zone annulaire (4).

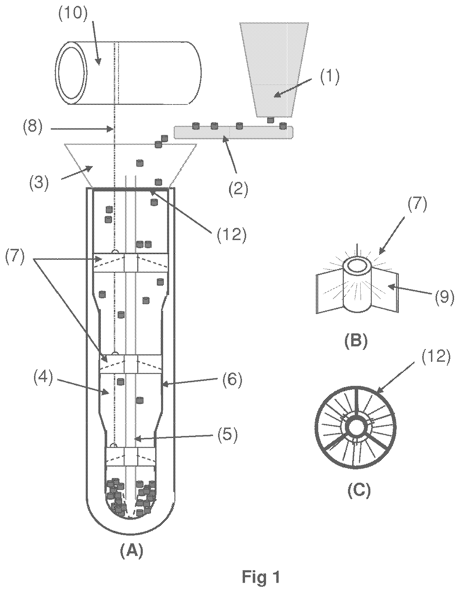

Dans certains cas où l'on souhaite que les éléments ralentisseurs (7) jouent également un rôle de centrage du tube interne (5) vis à vis du tube externe (6), les éléments ralentisseurs (7) peuvent être munis d'ailettes rigides (9) disposées de manière radiale et s'étendant sur toute la largeur de la zone annulaire (4), comme cela est représenté sur la figure 1b.

Lorsque le diamètre de la paroi de l'espace annulaire (4) varie, en raison de portions de tube externe (6) de diamètre interne décroissant de haut en bas, la solution à cette variation dépend du type de structure rigide des éléments ralentisseurs:
- la structure des éléments ralentisseurs (7) est rigide autour du tube interne (5), structure rigide dite "centrale", l'ajustement aux différents diamètres du tube externe (6) se fait par la souplesse des tiges souples dont la longueur est calculée pour pouvoir atteindre la paroi du tube externe (6) de plus grand diamètre (Cf. figure 1a)

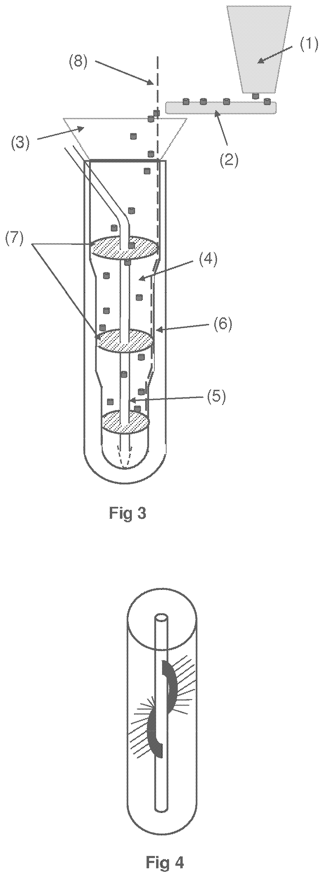

On arrive ainsi à un dispositif étagé dans lequel les différents éléments ralentisseurs (7) ont des structures rigides de diamètre croissant de bas en haut (Cf. figure 3). Sur la figure 4, les éléments ralentisseurs (7) ont une structure rigide en forme de tronçons hélicoïdaux, les tiges souples étant implantées de manière radiale tout le long du tronçon hélicoïdal. La forme hélicoïdal de la structure rigide permet un passage très facile de l'obstacle constitué par la traversée du tube interne (5) dans la partie supérieure de la zone annulaire (4), ou la traversée du centreur (12) permettant un positionnement correcte du tube interne (5).

Pour faciliter la descente du dispositif à l'intérieur de la zone annulaire (4), il est possible d'équiper le premier élément ralentisseur (7) de poids qui permettent de vaincre le frottement des tiges souples à la paroi du tube externe (6). Le premier élément ralentisseur (7) est celui qui est toujours placé le plus près de la surface du lit catalytique en formation.

Concernant la méthode de chargement faisant appel au dispositif tel que décrit précédemment, elle peut être décrite par les étapes suivantes:
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier élément ralentisseur (7) atteigne une distance par rapport au fond du tube comprise entre 50 cm et 100 cm. Ce premier élément peut être muni d'une masse complémentaire, suspendue ou fixée sur cet élément, pour faciliter la descente de l'ensemble des éléments,
- le tapis roulant ou le couloir vibrant (2) est mis en route de manière à fournir un débit de solide compris entre 250 kg/h et 500 kg/h.
- au fur et à mesure que le tube est rempli, le système de chargement est remonté de la zone annulaire (4) à l'aide de chaines et de l'enrouleur externe (10), de manière à respecter une distance constante entre le premier élément ralentisseur et la surface du lit qui se constitue progressivement. Cette distance est comprise entre 50 cm et 100 cm.
- le système est enroulé avec une vitesse équivalente à la vitesse de chargement du tube comprise entre 0,2 m / min et 0,4 m/min.
- pendant le chargement, la trémie (1) peut être remplie à nouveau si son volume est plus faible que celui du tube. Cette opération peut se réaliser avec ou sans arrêt du chargement.
- une fois le tube chargé et le système de chargement enroulé, l'ensemble est déplacé pour le chargement du tube suivant.

Des opérations de vérification du chargement, faisant appel à des mesures de perte de charge entre deux points du tube à baïonnette, accompagnent l'opération de chargement, mais ne font pas l'objet d'une description dans ce texte, étant considérées comme bien connues de l'homme du métier.

### EXEMPLE SELON L'INVENTION

Des essais de chargement ont été réalisés avec le dispositif selon l'invention constitué de deux éléments ralentisseurs (7) disposés dans une colonne expérimentale de 1 m de hauteur, constituée d'un tube interne (5) de diamètre externe 42 mm et d'un tube externe (6) de diamètre interne 128,1 mm.

Les particules solides à charger ont la forme de petits cylindres de hauteur 1,5 cm et de diamètre 0,8 cm.

Un élément ralentisseur (7) a une structure rigide circulaire en forme de spirale de diamètre interne 45 mm sur laquelle est implantée une pluralité de tiges souples sensiblement radiales.

La distance entre le premier élément ralentisseur (7) et la surface du lit en formation est maintenue égale à 50 cm pendant le chargement.

Le dispositif est relevé en continu à une vitesse de 0,3 mètre/min.

Une fois le lit chargé, la mesure de ΔP est faite avec un débit d'air de 130 Nm³/h.

Après déchargement, les particules cassées sont isolées du lot. Le taux de casse est très faible, de l'ordre de 0,1%.

Les résultats du chargement sont montrés dans le tableau 1 ci-dessous.

Le chargement obtenu avec ce système est très satisfaisant, avec une excellente reproductibilité en termes de perte de charge (écarts à la moyenne de ± 1,4%).

Le temps de chargement est au maximum de 3,3 minutes/mètre, ce qui correspond à un temps d'environ 40 minutes pour un tube de 12 m (pour un débit de solide d'environ 320 kg/h).

La densité de chargement est de 1009 kg/m³, reproductible dans tous les chargements.

**Tableau 1 : résultats des chargements avec le dispositif à éléments ralentisseurs sur une maquette de 1 m.**

| **Temps de chargement (min)** | **Temps de déchargement (min)** | **Hauteur de solide (cm)** | **Densité de chargement (kg/m³)** | **Perte de charge (mm H₂O)** | **Écart à la moyenne** | **Taux de brisure** |
|---|---|---|---|---|---|---|
| 3'00" | 9' | 94 | 1009 | 280 | -1,4% | 0,1% |
| 2'42" | 10' | 94 | 1009 | 288 | 1,4% | 0,07% |
| 2'47" | - | 94 | 1009 | 284 | 0 | - |
| | | | | | | |
| | | Moyenne perte de charge | | 284 | | |

## Revendications

1. Réacteur à tube baïonnette et dispositif de remplissage dense du catalyseur spécialement adapté à un réacteur échangeur de vaporeformage consistant en une pluralité de tubes baïonnettes enfermés dans une calandre, le catalyseur étant constitué de particules solides occupant au moins en partie l'espace annulaire (4) compris entre un tube interne (5) et un tube externe (6), l'ensemble de ces deux tubes constituant un tube baïonnette, la largeur dudit espace annulaire étant comprise entre 30 mm et 80 mm, et sa hauteur étant comprise entre 10 et 20 mètres, les particules de catalyseur ayant la forme de cylindres de hauteur approximativement 10 mm à 20 mm et de diamètre approximativement 10 mm à 20 mm, le dispositif consistant en :
- un ensemble d'éléments ralentisseurs (7) de forme annulaire, le diamètre interne de l'anneau étant sensiblement égal à celui du tube interne (5) et son diamètre externe étant sensiblement égal à celui du diamètre interne du tube externe (6), lesdits éléments ralentisseurs (7) étant régulièrement répartis verticalement le long de l'espace annulaire (4), et occupant chacun toute la section de la zone annulaire (4), reliés entre eux par des liaisons verticales souples, et séparés par une distance verticale comprise entre 50 cm et 150 cm, chaque élément ralentisseur étant constitué d'une structure rigide annulaire dite "centrale", d'un diamètre sensiblement égal à celui du tube interne (5) sur laquelle sont implantées une pluralité de tiges souples sensiblement radiales et occupant toute la section de la zone annulaire (4),
- lesdits éléments ralentisseurs (7) étant reliés entre eux par une ou plusieurs chaînes (8) qui s'enroulent autour d'un enrouleur (10) situé à l'extérieur du tube à remplir, et les particules de catalyseur étant contenues dans :
- une trémie centrale (1) permettant de délivrer les particules sur un tapis roulant (2) alimentant l'espace annulaire (4), par l'intermédiaire:
- d'un entonnoir (3), par lequel s'écoulent les particules à l'intérieur de l'espace annulaire (4).

2. Réacteur à tubes baïonnette et dispositif de remplissage selon la revendication 1, dans lequel chaque élément ralentisseur (7) est munit d'ailettes rigides (9) disposées de manière radiale et s'étendant sur toute la largeur de la zone annulaire (4).

3. Réacteur à tubes baïonnette et dispositif de remplissage selon la revendication 1, dans lequel pour faciliter la descente du dispositif à l'intérieur de la zone annulaire (4), le premier élément ralentisseur (7) est équipé de poids qui permettent de vaincre le frottement des tiges souples à la paroi du tube externe (6) en cas de structure rigide centrale.

4. Méthode de chargement du catalyseur faisant appel au réacteur et au dispositif selon la revendication 1,
**caractérisée par** la suite d'étapes suivantes:
- le système de chargement est initialement enroulé dans l'enrouleur externe (10), la trémie (1) étant remplie de solide,
- le système de chargement est ensuite introduit progressivement dans la zone annulaire (4) par sa partie supérieure jusqu'à ce que le premier élément ralentisseur (7) atteigne une distance par rapport au fond du tube comprise entre 50 cm et 100 cm.
- le tapis roulant ou le couloir vibrant (2) est mis en route de manière à fournir un débit de solide compris entre 250 kg/h et 500 kg/h, solide qui est introduit dans la zone annulaire (4) par l'intermédiaire de l'entonnoir (3),
- au fur et à mesure que la zone annulaire (4) se remplit, le système de chargement est remonté de la zone annulaire (4) à l'aide de l'enrouleur externe (10), de manière à respecter une distance constante entre le premier élément ralentisseur et la surface du lit qui se constitue progressivement, ladite distance étant comprise entre 50 cm et 100 cm.
- le système est enroulé avec une vitesse équivalente à la vitesse de chargement du tube comprise entre 0,2 mètre/min et 0,4 mètre/min.
- une fois le tube chargé et le système de chargement enroulé, le système est déplacé pour le chargement du tube suivant.

## Patentansprüche

1. Bajonettrohr-Reaktor und Vorrichtung zum dichten Befüllen des Katalysators, der speziell für einen Dampfreformierungsreaktor-tauscher ausgelegt ist, der aus mehreren Bajonettröhren besteht, die in einem Mantel eingeschlossen sind, wobei der Katalysator aus festen Teilchen besteht, die mindestens einen Teil des ringförmigen Raums (4) zwischen einem inneren Rohr (5) und einem äußeren Rohr (6) einnehmen, wobei die Anordnung dieser beiden Rohre ein Bajonettrohr bildet, wobei die Breite des ringförmigen Raums im Bereich zwischen 30 mm und 80 mm liegt, und seine Höhe im Bereich zwischen 10 und 20 Metern liegt, wobei die Katalysatorteilchen die Form von Zylindern mit einer Höhe von ungefähr 10 mm bis 20 mm und einem Durchmesser von ungefähr 10 mm bis 20 mm aufweisen, wobei die Vorrichtung aus Folgendem besteht:
- einer Anordnung von ringförmigen Bremselementen (7), wobei der Innendurchmesser des Rings im Wesentlichen gleich dem des inneren Rohrs (5) ist und sein Außendurchmesser im Wesentlichen gleich dem des Innendurchmessers des äußeren Rohrs (6) ist, wobei die Bremselemente (7) vertikal regelmäßig entlang des ringförmigen Raums (4) verteilt sind und jeweils den gesamten Querschnitt der ringförmigen Zone (4) einnehmen, miteinander über flexible vertikale Verbindungen verbunden und durch einen vertikalen Abstand im Bereich zwischen 50 cm und 150 cm getrennt sind, wobei jedes Bremselement aus einer « Zentrale » genannten, starren ringförmigen Struktur besteht, mit einem Durchmesser im Wesentlichen gleich dem des inneren Rohrs (5), auf der mehrere im Wesentlichen radiale flexible Stäbe befestigt sind und die den gesamten Querschnitt der ringförmigen Zone (4) einnehmen,
- wobei die Bremselemente (7) über eine oder mehrere Ketten (8) miteinander verbunden sind, die um einen Aufroller (10) aufgewickelt werden, der außerhalb des zu füllenden Rohrs liegt, und wobei die Katalysatorteilchen enthalten sind in:
- einem zentralen Beschickungstrichter (1), der die Abgabe der Teilchen auf ein Förderband (2) ermöglicht, das den ringförmigen Raum (4) versorgt, mittels:
- eines Trichters (3), durch den die Teilchen ins Innere des ringförmigen Raums (4) fließen.

2. Bajonettröhren-Reaktor und Vorrichtung zum Befüllen nach Anspruch 1, wobei jedes Bremselement (7) mit starren Rippen (9) versehen ist, die radial angeordnet sind und sich über die gesamte Breite der ringförmigen Zone (4) erstrecken.

3. Bajonettröhren-Reaktor und Vorrichtung zum Befüllen nach Anspruch 1, wobei, um das Absenken der Vorrichtung im Innern der ringförmigen Zone (4) zu erleichtern, das erste Bremselement (7) mit Gewichten ausgestattet ist, die es ermöglichen, die Reibung der flexiblen Stäbe an der Wand des äußeren Rohrs (6) im Fall einer starren zentralen Struktur zu überwinden.

4. Verfahren zum Beladen des Katalysators unter Verwendung des Reaktors und der Vorrichtung nach Anspruch 1, das durch die folgende Abfolge von Schritten gekennzeichnet ist:
- das Ladesystem wird zunächst auf den externen Aufroller (10) aufgewickelt, wobei der Beschickungstrichter (1) mit Feststoff gefüllt ist,
- das Ladesystem wird anschließend nach und nach über ihren oberen Teil in die ringförmige Zone (4) eingeführt, bis das erste Bremselement (7) einen Abstand in Bezug auf den Boden des Rohrs im Bereich zwischen 50 cm und 100 cm erreicht,
- das Förderband oder der Schüttelförderer (2) wird in Gang gesetzt, um einen Feststoffdurchsatz im Bereich zwischen 250 kg/h und 500 kg/h zu liefern, wobei der Feststoff mittels des Trichters (3) in die ringförmige Zone (4) eingeführt wird,
- je mehr die ringförmige Zone (4) gefüllt ist, umso weiter wird das Ladesystem von der ringförmigen Zone (4) mithilfe des externen Aufrollers (10) nach oben bewegt, um einen konstanten Abstand zwischen dem ersten Bremselement und der Oberfläche der Schicht einzuhalten, die sich nach und nach bildet, wobei der Abstand im Bereich zwischen 50 cm und 100 cm liegt.
- das System wird mit einer Geschwindigkeit gleich der Ladegeschwindigkeit des Rohrs im Bereich zwischen 0,2 Meter/Min. und 0,4 Meter/Min. aufgewickelt,
- wenn das Rohr beladen und das Ladesystem aufgewickelt ist, wird das System zum Laden des nächsten Rohrs verlagert.

## Claims

1. Bayonet tubes reactor and device for densely filling catalyst specially adapted to a steam reforming exchanger-reactor consisting of a plurality of bayonet tubes enclosed in a shell, the catalyst being constituted by solid particles occupying at least part of the annular space (4) included between an internal tube (5) and an external tube (6), the assembly of these two tubes constituting a bayonet tube, the width of said annular space being in the range 30 mm to 80 mm, and its height being in the range 10 to 20 metres, the catalyst particles being in the form of cylinders with an approximate height of 10 mm to 20 mm and an approximate diameter of 10 mm to 20 mm, the device consisting of:
• a series of slowing elements (7) which are annular in shape, the internal diameter of the ring being substantially equal to that of the internal tube (5) and its external diameter being substantially equal to that of the internal diameter of the external tube (6), said slowing elements (7) being distributed vertically in a regular manner along the annular space (4) and each occupying the whole section of the annular zone (4), connected together via vertical flexible connections and separated by a vertical distance in the range 50 cm to 150 cm, each slowing element being constituted by a rigid annular structure termed a "central" structure with a diameter substantially equal to that of the internal tube (5) onto which a plurality of substantially radial flexible rods are attached and occupying the whole section of the annular zone (4),
• said slowing elements (7) being connected together via one or more chains (8) which are wound around a spooler (10) located outside the tube to be filled, and the particles of catalyst being contained in:
• a central feed hopper (1) which can be used to deliver the particles onto a conveyor belt (2) supplying the annular space (4) via:
• a funnel (3) via which the particles flow into the interior of the annular space (4).

2. Bayonet tubes reactor and filling device according to claim 1, in which each slowing element (7) is provided with rigid fins (9) disposed in a radial manner and extending over the whole width of the annular zone (4).

3. Bayonet tubes reactor and filling device according to claim 1 in which, in order to facilitate the descent of the device into the annular zone (4), the first slowing element (7) is equipped with a weight which can overcome the friction of the flexible rods on the wall of the external tube (6) in the case of a rigid central structure.

4. A method for loading catalyst using the reactor and the device according to claim 1, **characterized by** the following series of steps:
• initially, the loading system has been wound into the external spooler (10), the feed hopper (1) being filled with solid;
• next, the loading system is gradually introduced into the annular zone (4) via its upper portion until the first slowing element (7) reaches a distance with respect to the bottom of the tube in the range 50 cm to 100 cm;
• the conveyor belt or the shaker conveyor (2) is started up so as to provide a flow rate of solid in the range 250 kg/h to 500 kg/h, the solid particles being introduced into the annular zone (4) via the funnel (3);
• as and when the annular zone (4) is filled, the loading system is raised from the annular zone (4) with the aid of the external spooler (10) so as to keep a constant distance between the first slowing element and the surface of the bed which is gradually being constituted, said distance being in the range 50 cm to 100 cm;
• the system is wound up at a speed equivalent to the speed of loading of the tube, in the range 0.2 metre/min to 0.4 metre/min;
• once the tube has been loaded and the loading system has been wound up, the system is displaced in order to load the next tube.
